# EUROPEAN PATENT APPLICATION

(11) **EP 2 706 439 A1**
(43) Date of publication of application: **12.03.2014**
(21) Application number: 12183065.7
(22) Date of filing: 05.09.2012
(51) Int. Cl.: G06F 3/0354

(54) **Stylus having a flexibly-resilient tip**

(71) Applicant: BlackBerry Limited, Waterloo, ON N2K 0A7 (CA)
(72) Inventor: Szymanski, Aaron Micheal, Mississauga, Ontario L4W 0B5 (CA); Paschke, Brian Dennis, Mississauga, Ontario L4W 0B5 (CA)
(74) Representative: Bryn-Jacobsen, Caelia

(57) **Abstract**

A stylus has a first end and a flexibly-resilient tip disposed at that first end. By one approach this tip is seamlessly connected to the stylus and thereby affords a fully-sealed connection that prevents contaminants from entering the stylus via the tip. The stylus can further include a pressure-sensitive sensor disposed therein that is configured to sense compression of the flexibly-resilient tip. If desired, the stylus can also include a wireless transmitter that operably couples to the pressure-sensitive sensor and that is configured to transmit information in response to sensed tip compression.

## Description

### Field of Technology

The present disclosure relates to styli that serve as a user-input interface for an electronic device.

### Background

Stylus-based user interfaces are known in the art. Generally speaking, a stylus is typically a hand-held writing utensil that often (but not exclusively) has a pencillike elongated form factor and that includes at least one pointed end (i.e., a tip) configured to interact with a drawing/writing surface. Using a stylus as an input mechanism with a display offers a variety of advantages over a fingertip including the opportunity for increased precision as well as an expression modality that accords with the user's own past experience with a pencil or pen.

Some styli include an integral pressure sensor. So configured, the stylus can detect the pressure that the user employs from moment to moment when bearing the stylus tip down on the drawing/writing surface. In many cases the stylus then communicates this information to a corresponding electronic device. The latter can then employ that pressure information in a variety of ways. As one simple example, the amount of pressure being applied can serve to control the relative thickness of a corresponding line being drawn on a display.

Such styli typically employ a movable nib as the stylus tip. This movable nib, in turn, mechanically couples to the pressure sensor. So configured, as the nib moves inwardly of the stylus with increased writing pressure, the nib will impose greater pressure upon the pressure sensor. Such an approach, though satisfactory in some regards, can give rise to a variety of concerns. This approach, for example, necessarily includes a gap to accommodate the movable nib. This gap, in turn, offers a path by which various contaminants can enter the stylus and impair proper functionality. As another example, the nib typically comprises a hard, smooth substance. Such a nib moves quite easily across the (typically) smooth surface of a writing/drawing surface in a fashion that is quite distinct from a typical user's writing experience. This difference, in turn, can undercut the anticipated benefits of providing the user with an input-interface modality that is based on, and seeks to leverage, the user's prior experience with pens, pencils, and the like.

### Brief Description of the Drawings

FIG. 1 is a side-elevational view in accordance with the prior art.

FIG. 2 is a side-elevational schematic view in accordance with the disclosure.

FIG. 3 is a side-elevational view in accordance with the disclosure.

### Detailed Description

The following describes an apparatus pertaining to a stylus having a first end and a flexibly-resilient tip disposed at that first end. By one approach this tip is seamlessly connected to the stylus and thereby affords a fully-sealed connection that prevents contaminants from entering the stylus via the tip. The stylus can further include a pressure-sensitive sensor disposed therein that is configured to sense compression of the flexibly-resilient tip. If desired, the stylus can also include a wireless transmitter that operably couples to the pressure-sensitive sensor and that is configured to transmit information in response to sensed tip compression.

So configured, such a stylus can readily provide the functionality and benefits of a pressure-sensitive stylus while avoiding problems that stem from contaminants entering the interior of the stylus. Furthermore, the flexibly-resilient tip can interact with a smooth writing/drawing surface with a bit more resistance than a hard nib and can accordingly provide a better, more-traditional feel for the user. In particular, that less-smooth interaction between the stylus and the writing/drawing surface can better accord with the user's own experience-based expectations.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

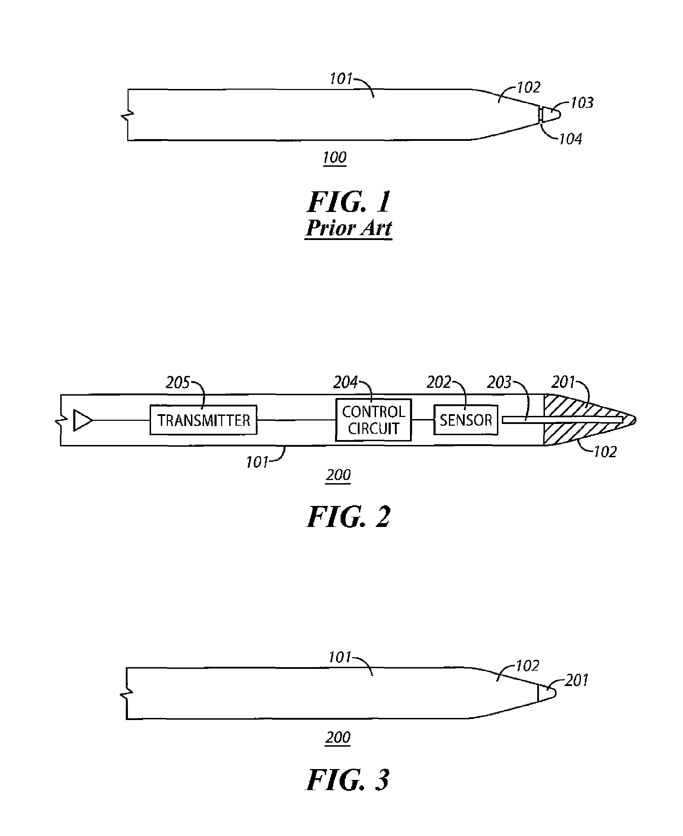

Prior to discussing various details as pertain to these teachings, however, it may be helpful to first provide an illustrative example of a prior-art approach in these regards. FIG. 1 depicts a pressure-sensitive stylus 100 having a stylus body 101 that includes a first end 102 configured to accommodate a stylus tip 103. The latter is physically discrete onto itself and is able to move in and out of the stylus body 101 in response to an axially-vectored force being imposed upon that stylus tip 103 and released. A gap 104 between the stylus tip 103 and the stylus body 101 provides space to accommodate such movement.

FIGS. 2 and 3 provide an illustrative example of a pressure-sensitive stylus 200 that accords with many of the teachings set forth herein. That said, it will be understood that no particular limitations regarding the scope of these teachings is intended by way of the specifics of these examples and that these examples are intended instead to serve in a more illustrative manner.

The stylus body 101 in this example can have any of a variety of shapes and lengths. Generally speaking, however, the stylus body 101 will have a form factor suitable to its purpose of being grasped by the human hand and conveniently and accurately manipulated to facilitate the scribing of desired images. The present teachings will accommodate forming the stylus body 101 using any of a variety of materials including various metals and plastic materials as desired. By one approach the stylus body 101 can be at least partially hollow in order to conveniently house one or more active components.

In this illustrative example the aforementioned first end 102 of the stylus comprises, at least in part, a flexibly-resilient tip 201. This flexibly-resilient tip 201 can have, for example, the form factor of a truncated cone (i.e., a frustrum) to provide a surface-contact portion that offers more surface space than a sharp tip. Such a configuration can help to provide a better (i.e., more natural) feel to the use of the pressure-sensitive stylus 200 in conjunction with a smooth scribing surface.

There are a variety of materials that may provide satisfactory service as the flexibly-resilient tip 201. Thermoplastic urethane, thermoplastic polyurethane, thermoplastic elastomer, and even silicone are all examples of materials that may be particularly useful in a wide variety of application settings.

By one approach, and as illustrated, this flexibly-resilient tip 201 is seamlessly connected to the stylus body 101. That is to say, there is no gap between the flexibly-resilient tip 201 and the stylus body 101 and there are no substantial surface discontinuities along the exterior surface of the pressure-sensitive stylus 200 in the vicinity of where the flexibly-resilient tip 201 and the stylus body 101 meet.

Also in this illustrative example the flexibly-resilient tip 201 connects to the stylus body 101 via a sealed connection and, in particular, a fully-sealed connection. So configured, there are no openings between the exterior of the pressure-sensitive stylus 200 and the interior thereof via the connection between the flexibly-resilient tip 201 and the stylus body 101. By one approach, and particularly where the stylus body 101 and the flexibly-resilient tip 201 comprise, during the manufacturing process, two physically-discrete and separated components, the flexibly-resilient tip 201 may be bonded to the stylus body 101 using, for example, an adhesive of choice. By another approach, the flexibly-resilient tip 201 can be molded to the stylus body 101 during the manufacturing process to yield an integrated structure that again offers an at least partially sealed connection.

By one approach the pressure-sensitive stylus 200 further includes a pressure-sensitive sensor 202 disposed within the stylus body 101 that is configured to sense compression of the flexibly-resilient tip 201 (such as, for example, axial deformation and/or axial compression of the flexibly-resilient tip 201). To further facilitate such an approach, a non-flexible member 203 (such as a hard plastic or metal rod) can be connected to the flexibly-resilient tip 201 and also axially disposed (at least in part) within the stylus body 101. Such a non-flexible member 203 can be configured (for example, by appropriately selecting both the orientation and length of the non-flexible member 203) to contact the pressure-sensitive sensor 202 at least when the flexibly-resilient tip 201 is axially compressed.

If desired, the pressure-sensitive stylus 200 can further optionally include a control circuit 204 that operably couples to the aforementioned sensor 202. So configured, the control circuit 204 can facilitate determining when to transmit information regarding sensed pressure and how to transmit that information. Such a control circuit 204 can comprise a fixed-purpose hard-wired platform or can comprise a partially or wholly programmable platform as desired. Such architectural options are well known and understood in the art and require no further description here. This control circuit 204 may be configured (for example, by using corresponding programming as will be well understood by those skilled in the art) to carry out one or more of the steps, actions, and/or functions described herein.

In those regards a wireless transmitter 205 of choice that operably couples to the pressure-sensitive sensor 202 (for example, via the aforementioned control circuit 204) can be configured to transmit information in response to the sensing of tip compression (including, for example, presently-occurring compression, sustained compression, and/or released compression). These teachings will accommodate use of any of a wide variety of wireless transmitters 205. Examples include but are not limited to short-range radio-frequency transmitters such as Bluetooth^{™}-compatible transmitters as well as light-frequency transmitters that utilize, for example, infrared light as a transmission medium. As the present teachings are not particularly sensitive to any particular selections in these regards, further elaboration will not be provided here.

So configured, a stylus can actively detect and respond to tip compression as appropriate while providing a more natural feel to the user when scribing. Using a sealed approach as described above provides at least the benefit of protecting the inner workings of the stylus from contamination with external debris and materials. And using a seamless, conformal approach to couple the tip to the stylus body further provides an improved aesthetic appearance and feel that can lead to increased user satisfaction.

These teachings are highly flexible in practice and will accommodate any number of alterations. These teachings are also highly scalable and can be successfully employed with a wide variety of styli form factors and sizes.

The present disclosure may be embodied in other specific forms without departing from its essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. An apparatus comprising:
a stylus (101) having a first end (102);
a flexibly-resilient tip (201) disposed at the first end of the stylus.

2. The apparatus of claim 1 wherein the flexibly resilient tip is comprised, at least in part, of thermoplastic polyurethane.

3. The apparatus of claim1 wherein the tip is seamlessly connected to the stylus.

4. The apparatus of claim 1 wherein the tip connects to the stylus via a sealed connection.

5. The apparatus of claim 4 wherein the sealed connection comprises a fully-sealed connection.

6. The apparatus of claim 1 further comprising:
a pressure-sensitive sensor (202) disposed within the stylus and configured to sense compression of the tip.

7. The apparatus of claim 6 further comprising:
a wireless transmitter (205) operably coupled to the pressure-sensitive sensor and configured to transmit information in response to sensing compression of the tip.

8. The apparatus of claim 6 further comprising:
a non-flexible member (203) connected to the tip and disposed within the stylus and configured to contact the pressure-sensitive sensor at least when the tip is compressed.

9. The apparatus of claim 1 wherein the tip is molded to the stylus.

10. The apparatus of claim 1 wherein the tip is bonded to the stylus.

11. The apparatus of claim 6 wherein the flexibly-resilient tip is comprised, at least in part, of thermoplastic polyurethane.

12. The apparatus of claim 11 wherein the pressure-sensitive sensor is particularly sensitive to axial deformation of the flexibly-resilient tip.

13. The pressure-sensitive stylus of claim 12 wherein the pressure-sensitive sensor is particularly sensitive to axial compression of the flexibly-resilient tip.

## Amended claims

### Amended claims in accordance with Rule 137(2) EPC.

**1.** An apparatus comprising:
a stylus (101) having a first end (102);
a flexibly-resilient tip (201) comprised, at least in part, of thermoplastic polyurethane and seamlessly connected to the first end of the stylus.

**2.** The apparatus of claim 1 further comprising:
a pressure-sensitive sensor (202) disposed within the stylus and configured to sense compression of the tip.

**3.** The apparatus of claim 2 further comprising:
a wireless transmitter (205) operably coupled to the pressure-sensitive sensor and configured to transmit information in response to sensing compression of the tip.

**4.** The apparatus of claim 2 further comprising:
a non-flexible member (203) connected to the tip and disposed within the stylus and configured to contact the pressure-sensitive sensor at least when the tip is compressed.

**5.** The apparatus of claim 1 wherein the tip is molded to the stylus.

**6.** The apparatus of claim 1 wherein the tip is bonded to the stylus.

**7.** The apparatus of claim 2 wherein the pressure-sensitive sensor is particularly sensitive to axial deformation of the flexibly-resilient tip.

**8.** The pressure-sensitive stylus of claim 7 wherein the pressure-sensitive sensor is particularly sensitive to axial compression of the flexibly-resilient tip.
